# EUROPÄISCHE PATENTSCHRIFT

(11) **EP 2 891 633 B1**
(45) Veröffentlichungstag und Bekanntmachung des Hinweises auf die Patenterteilung: **29.04.2020**
(21) Anmeldenummer: 14198907.9
(22) Anmeldetag: 09.03.2010
(51) Int. Cl.: C02F 11/18, C02F 1/02, C02F 11/12, C02F 11/04, C02F 9/10

(54) **Vorrichtung und Verfahren zur thermischen Hydrolyse von organischer Masse**
Device and process for the thermal hydrolysis of organic masses
Dispositif et procédé d'hydrolyse thermique de masses organiques

(30) Priorität: 25.03.2009 DE 102009014776
(43) Veröffentlichungstag der Anmeldung: 08.07.2015
(62) Teilanmeldung aus: 10002457.9
(73) Patentinhaber: Eliquo Stulz GmbH, 79865 Grafenhausen (DE)
(72) Erfinder: Buchmüller, Marianne, 79777 Ühlingen-Birkendorf (DE)
(74) Vertreter: Grünecker Patent- und Rechtsanwälte PartG mbB

(56) Entgegenhaltungen:
- EP-A1- 1 894 893
- EP-B1- 1 198 424
- DE-A1- 10 117 321

## Beschreibung

Die Erfindung betrifft eine Vorrichtung zur thermischen Hydrolyse von organischer Masse gemäß dem Oberbegriff des Anspruchs 1 und ein Verfahren zur thermischen Hydrolyse von organischer Masse gemäß dem Oberbegriff von Anspruch 7.

Bei der Reinigung von kommunalem und gewerblichem Abwasser mittels mechanischbiologischer Verfahren fallen Klärschlämme an. Die Sicherung einer hohen Wasserqualität führte innerhalb der letzten Jahre zu einer fortschreitenden Weiterentwicklung der Abwasserbehandlung sowie einer Erhöhung des Anschlussgrades. Als Folge dieser Entwicklung wird mit einem ansteigenden Klärschlammaufkommen besonders in den Industriestaaten gerechnet. Nach Angaben der EU war ein Anstieg der Klärschlammtrockenmasse von 5,5 Mio. t in 1992 auf 8,3 Mio. t im Jahr 2005 zu verzeichnen.

Ein gefordertes Verwertungsgebot sieht für die Entsorgung der Klärschlämme in erster Linie eine Rückführung in den Stoffkreislauf durch eine Verwertung in der Landwirtschaft oder im Landbau vor. Die Akzeptanz dieses Entsorgungsweges ist jedoch stark abhängig vom tagespolitischen Geschehen und schwankt zwischen Befürwortung und vollständiger Ablehnung. Eine Ausschleusung aus dem Stoffkreislauf durch eine Deponierung würde eine Vernichtung sowohl von Schad- als auch von Wertstoffen bedeuten und ist seit 2005 nur noch nach einer Verbrennung der Klärschlämme zulässig.

Durch die Schlammfaulung als Standardverfahren der biologischen Schlammstabilisierung wird eine deutliche Reduzierung der Schlammtrockenmasse erreicht. Auch vor dem Hintergrund einer folgenden Verbrennung birgt dieser Verfahrensschritt ökologische und ökonomische Vorteile. Im Hinblick auf eine landwirtschaftliche Verwertung führt die anaerobe Stabilisierung zu einem lagerfähigen und hygienisch unbedenklicheren Produkt. Die Umsetzung der organischen Substanzen von belebten Schlämmen bleibt jedoch, da diese zum größten Teil aus schwer abbaubarer organischer Zellsubstanz bestehen, in der Regel auf 40 bis 50 % beschränkt.

Zahlreiche vorangegangene Untersuchungen haben bereits gezeigt, dass der limitierende Schritt des anaeroben Stoffwechselprozesses, die Hydrolyse partikulärer Substanz, durch eine gezielte Vorbehandlung des Klärschlammes unterstützt werden kann. So bewirkt ein Aufschluss der Zellmembranen die Freisetzung intrazellulären Materials und damit eine beschleunigte und weitergehende Stabilisierung. Der Aufschluss erfolgt durch die Einwirkung äußerer Kräfte, die chemischen, thermischen, mechanischen oder biologischen Ursprungs sein können.

Der dauerhaften Entsorgung der Klärschlämme geht in der Regel eine Zwischenlagerung derselben voraus. Aus diesem Grund müssen die Klärschlämme durch geeignete Stabilisierungsverfahren in einen lagerfähigen Zustand überführt werden, so dass negative Umwelteinflüsse infolge einer unkontrollierten Faulung ausgeschlossen werden. In der Mehrzahl der größeren kommunalen Abwasserreinigungsanlagen in Deutschland werden die Klärschlämme einer anaeroben Behandlung unterzogen, mit der unter geeigneten Randbedingungen eine Stabilisierung einhergeht. Als sekundäre Effekte sind hier die Verringerung der organischen Trockenmasse, die Verbesserung der Entwässerbarkeit, die Verminderung von Krankheitserregern sowie die Gewinnung und Nutzung von Faulgas zu nennen.

Die anaerobe Stabilisierung wird überwiegend im Temperaturbereich um 35 °C betrieben, in dem mesophile Mikroorganismen ihr Wachstumsoptimum besitzen. Daneben existiert für thermophile Bakterien ein weiteres Temperaturoptimum in einem relativ engen Bereich von 48 bis 55 °C. Obwohl letztere höhere Umsatzraten erreichen, hat sich weitgehend der mesophile Temperaturbereich durchgesetzt. Dieser birgt den Vorteil, dass die Aufheizung energiegünstiger realisiert werden kann und die Organismen weniger empfindlich auf Temperaturschwankungen reagieren. Eine thermophile Faulung kann unter dem Gesichtspunkt der Hygienisierung des Schlammes Vorteile ergeben, kommt jedoch nur vereinzelt zum Einsatz.

Der anaerobe Abbau organischer Substanz vollzieht sich nach heutigem Kenntnisstand in vier Phasen bis zu den Endprodukten Wasser, Methan und Kohlendioxid. In der einleitenden Hydrolysephase werden polymere Substrate durch Exoenzyme in niedermolekulare gelöste Bestandteile gespalten. Gefolgt von fermentativen Abbauvorgängen in der so genannten Versäuerungsphase ("Acidogenese"), werden die monomeren und oligomeren Bestandteile zu reduzierten organischen Verbindungen (zum Beispiel Fettsäuren, Aminosäuren und Alkohole) sowie Kohlendioxid und Wasserstoff abgebaut. Ein Teil der gebildeten Produkte (Acetat, Kohlendioxid, Wasserstoff) kann direkt von methanogenen Bakterien umgesetzt werden. Die restlichen Fermentationsprodukte müssen zunächst von acetogenen Bakterien, die in enger Symbiose mit den methanogenen Organismen stehen, zu Acetat umgewandelt werden. Etwa 70 % des gesamten umgesetzten Kohlenstoffs werden anschließend durch acetothrophe methanogene Mikroorganismen zu Methan und Kohlendioxid umgewandelt, während etwa 30 % über die direkte Umsetzung des intermediär gebildeten Wasserstoffs und Kohlendioxids durch hydrogenothrophe Methanbildner abgebaut werden.

Die Geschwindigkeit des gesamten anaeroben Abbauprozesses von Klärschlämmen wird durch den ersten Prozessschritt, die Hydrolyse, limitiert. Die Hydrolysegeschwindigkeit kann als Reaktion erster Ordnung beschrieben werden, bei der die Abbaukonstante temperaturabhängig ist und bei 35 °C Werte um 0,25 d⁻¹ annimmt. Dieser Teilprozess bestimmt in Abhängigkeit der Aufenthaltszeit letztendlich das Stabilisierungsergebnis. Wird die Aufenthaltszeit verkürzt, so reduziert sich ebenfalls der Abbau organischer Stoffe, da schwer zu hydrolysierende Substanzen den Reaktor weitgehend unverändert passieren können. Manche Substanzen wie zum Beispiel fakultativ anaerobe Bakterien werden im Faulprozess überhaupt nicht angegriffen. Solange jedoch sichergestellt ist, dass sich die methanogenen Bakterien im System weiter halten und vermehren können, verursacht die - durch die verkürzte Aufenthaltszeit verringerte - Hydrolyse lediglich einen Rückgang der Gasausbeute. Bei einer weiteren Verkürzung der Aufenthaltszeit unter drei Tagen kommt jedoch auch die Methanbildung zum Erliegen, weil die Generationszeit der methanogenen Bakterien unterschritten wird.

Mittels Desintegration, das heißt der Einwirkung von äußeren Kräften auf Klärschlämme, können die Klärschlämme zerkleinert werden. Je nach Intensität der eingetragenen Energie führt die Desintegration zu einer Auflösung der Flockenstruktur des Schlamms bis hin zu einem Aufschluss der im Schlamm enthaltenen Mikroorganismen. Die freigesetzten organischen Substanzen sind sowohl dem anaeroben, als auch dem aeroben Abbau leichter zugänglich. Aus diesem Grund ist der Einsatz der Desintegration an verschiedenen Orten einer Kläranlage möglich und sinnvoll. Besonders vorteilhaft ist die Desintegration bei schlecht hydrolysierbaren Schlämmen.

Klärschlämme können auch mittels thermischer Desintegrationsverfahren behandelt werden, wobei diese in niederthermische (Temperaturen kleiner als 100°C) und hochthermische Verfahren (Temperaturen größer als 100°C) unterteilt werden. Thermische Desintegrationsverfahren ermöglichen eine effiziente Möglichkeit des Aufschließens der im Schlamm enthaltenen Mikroorganismen und machen dadurch diese dem anaeroben als auch aeroben Abbau leichter zugänglich.

Aus der EP 1 198 424 B1 ist ein Verfahren zur kontinuierlichen Hydrolyse von organischem Material bekannt, wobei in einer Dampf/Schlamm-Mischeinheit dem Verfahren zugeführter Schlamm mit Entspannungsdampf aus einem Druckentlastungstank gemischt wird. Weiterhin wird von dem Druckentlastungstank Schlamm über eine Pumpe zu einem Schlamm/Schlamm-Wärmetauscher gefördert, um den einströmenden Schlamm zu erwärmen.

Allerdings fällt der Entspannungsdampf entsprechend dem gewählten Druck im Druckentlastungstank an. Wird der Druck zu niedrig gewählt, fällt Entspannungsdampf mit entsprechend niedriger Temperatur an; wird der Druck im Druckentlastungstank höher gewählt, kann das Hydrolyseergebnis negativ beeinflusst werden. Die Vorerwärmung mit dem Entspannungsdampf ist daher direkt abhängig von den gewählten Verfahrensbedingungen im Druckentlastungstank und damit von den Hydrolysebedingungen.

Weiterhin kann mehr Entspannungsdampf anfallen, als tatsächlich in der Vorerwärmung verbraucht werden kann. Im Extremfall bedeutet dies, dass der Rohschlamm im Vorerwärmungstank zu sieden beginnt, was dort Inkrustierungen zur Folge hat. Durch den möglichen Überschuss an Entspannungsdampf bleiben gleichzeitig erhebliche Energiemengen ungenutzt, was die Wirtschaftlichkeit des Verfahrens einschränkt.

Der Entspannungsdampf enthält neben Wasserdampf auch flüchtige organische Bestandteile sowie Hydrolysegas. Diese werden dem Vorerwärmungstank zugeführt, wobei die flüchtigen organischen Bestandteile des Entspannungsdampfs leicht biologisch abbaubar sind. Da der Entspannungsdampf nicht sofort aus dem System abgeführt, sondern zurückgeführt und mit dem Rohschlamm vermischt wird, wird hier der Grundsatz verletzt, nach dem Reaktionsendprodukte für die Aufrechterhaltung eines maximalen Stoffumsatzes sofort aus dem System entnommen werden sollten.

Da der Schlamm unter nur geringem Überdruck mit dem Entspannungsdampf vermischt und erhitzt wird, muss nach der Vorerwärmung nahe am Siedepunkt stehender Schlamm auf Hydrolysedruck gebracht werden, wodurch eine hitzebeständige Pumpe erforderlich ist. Auch das Rückpumpen des Schlamms zum Schlammwärmetauscher erfordert spezielle Pumpen, die die Rückführung relativ kostenaufwändig machen.

Weiterhin ist der konstruktive Aufwand für die Rückleitung von Schlamm zur Erwärmung von frisch zugeführtem Schlamm hoch, da der Wärmetauscher so ausgelegt werden muss, dass sich keine Verkrustungen oder Ablagerungen darin bilden. Die Rückführung muss so ausgelegt werden, dass eine kontinuierliche und gesicherte Förderung von Schlamm möglich ist, ohne dass es zu Verstopfungen in den Leitungen kommt.

Ein derartiger Schlamm/Schlamm-Wärmetauscher weist gemeinhin einen hohen Druckverlust auf. Dieser Druckverlust wird noch erhöht, wenn aufgrund bestimmter Regelzustände keine Wärme zurückgeführt werden muss, und damit der Schlamm in der Rückführung nicht bewegt wird. Das thixotrope Verhalten des Schlammes führt dazu, dass sich die Viskosität des stehenden Schlammes weiter erhöht, so dass bei Wiederaufnahme der Wärmerückführung ein sehr hoher Druckwiderstand überwunden werden muss, bis erneut Schlamm durch die Rückführung des Wärmetauschers fließt.

In der DE 101 17 321 A1 wird gelehrt, dass in einem Verfahren zur Behandlung von biogenen Restmassen die bei der Entspannung im Entspannungstank entstehenden Dämpfe über Ringleitungen zu Wärmetauschern geleitet werden, um zugeführte biogene Restmassen vorzuwärmen. Das in den Wärmetauschern gebildete Kondensat wird über die Ringleitungen zu den Entspannungsbehältern zurückgeführt. Auch bei diesem Verfahren ergibt sich das Problem, dass die Ringleitungen so ausgelegt werden müssen, dass es zu keinerlei Verstopfung durch Bestandteile des Kondensats kommt. Weiterhin ist die Wärmekapazität des Dampfes nicht sehr hoch.

Bei der DE 101 17 321 A1 handelt es sich um ein diskontinuierliches Verfahren in den einzelnen Entspannungstanks, da diese jeweils verschlossen werden und für eine bestimmte Zeit ein gewisser Druck gehalten wird. Erst bei der Öffnung der Entspannungstanks können die Entspannungsdämpfe über die Ringleitung zurückgeleitet werden. Dadurch erfordert dieses Verfahren mehrere parallel angeordnete Entspannungstanks, um ein zumindest quasikontinuierliches Verfahren zu ermöglichen.

In der US 2004/0060863 A1 wird ein Verfahren für die thermische Hydrolyse von Schlamm offenbart, wobei Schlamm in mehreren parallel angeordneten Behältnissen mit Dampf aus einem jeweils anderen Behältnis erhitzt wird. Auch hier handelt es sich nur um ein quasikontinuierliches Verfahren, da mehrere Reaktoren parallel angeordnet werden müssen.

Die EP 07 84 504 B1 offenbart ein Verfahren, in dem Hydrolysat aus einem Reaktionsgefäß verwendet wird, um zu einem anderen Reaktionsgefäß zugeführtes Hydrolysat zu erwärmen. Weiterhin ist eine Rückführung von Dampf vorgesehen.

Auch die WO 2008/026932 A1, WO 2007/117152 A1, EP 0 996 595 B1 und DE 198 11 648 A1 offenbaren Verfahren zur thermischen Hydrolyse und zum Zellaufschluss von organischem Material.

Die WO 2008/026932 A1 zeigt die Rückführung von Dampf. Die WO 2007/117152 A1 lehrt eine Rückführung von Ausschuss und dehydrierter Masse vor einen Faultank. Gemäß der EP 0 996 595 B1 werden die Strömungsverhältnisse im Reaktor, insbesondere die Geschwindigkeit der koaxialen Umwälzung der Suspension, durch eine im Bypass eingeschaltete Pumpe beeinflusst.

Aus der EP 1 894 893 A1 ist die Rückführung von Dampf in einer Anlage zur organischen Abfallverwertung bekannt.

Die EP 1 198 424 B1 offenbart ebenfalls die Rückführung von Dampf, dieser wird dem Schlamm in einer Mischeinheit zugeführt.

Aufgabe der Erfindung ist es, eine Vorrichtung und ein Verfahren zur thermischen Hydrolyse von organischer Masse bereitzustellen, die eine Senkung des primären Energiebedarfs ermöglichen und gleichzeitig betriebssicher, umsatzstark und kostengünstig in der Konstruktion und im Betrieb sind.

Diese Aufgabenstellung wird mit einer Vorrichtung zur thermischen Hydrolyse von organischer Masse gemäß Anspruch 1 und einem Verfahren zur thermischen Hydrolyse von organischer Masse gemäß Anspruch 7 gelöst.

Die erfindungsgemäße Vorrichtung zur thermischen Hydrolyse von organischer Masse umfasst ein Heizelement und ein Kühlelement, um die organische Masse zu erwärmen bzw. abzukühlen, wobei als Heizelement und Kühlelement jeweils Wärmetauscher vorgesehen sind, in denen Wärme zwischen der organischen Masse und einem Medium getauscht wird, und wobei die organische Masse und das Medium in den Wärmetauschern voneinander getrennt sind.

Erfindungsgemäß ist eine Rückführungsleitung zur Rückführung mindestens eines Teils der hydrolysierten organischen Masse zur noch nicht hydrolysierten Masse mit einem Rückführventil vorgesehen sein. Das Rückführventil ist ausgelegt, den Durchsatz der Rückführungsleitung zu regeln. Mittels dieses Ventils kann beispielsweise ein Rezirkulationsstrom eingestellt werden und so die Nettodurchsatzleistung der Anlage geregelt werden. Weiterhin bietet die Rückführungsleitung die Möglichkeit, eine automatische Reinigung durchzuführen, indem Reinigungsflüssigkeiten im Kreis gepumpt werden, um so das System von Ablagerungen der organischen Masse zu reinigen.

Die im Folgenden verwendete Formulierung, dass ein Bauelement zwischen zwei anderen Bauelementen vorgesehen ist, schließt nicht aus, dass auch noch andere Bauelemente zwischen den beiden Bauelementen vorgesehen sind.

Durch die Trennung des Mediums und der organischen Masse in den Wärmetauschern für Heiz- und Kühlelement kann sowohl auf der Kühlseite, wie auch auf der Heizseite der Vorrichtung eine Entkopplung der Drücke zwischen dem Medium und der organischen Masse erreicht werden. Damit kann sowohl in der organischen Masse, als auch im Medium der optimal geeignete Druck eingestellt werden, um ein möglichst effizientes Verfahren zu ermöglichen.

Weiterhin kann das Medium unabhängig von der organischen Masse in geeigneter Form ausgewählt werden, so dass ein kostengünstiges und effizientes Heizen und Kühlen der organischen Masse möglich ist. Weiterhin kann durch geeignete Auswahl des Mediums bewirkt werden, dass im Wärmetauscher auf Seiten des Mediums keine Gefahr der Verkrustung besteht. Dadurch ergeben sich zusätzliche konstruktive Freiheiten für die Ausgestaltung der Wände, die der organischen Masse zugewandt sind, so dass Verkrustungen durch geeignete geometrische Gestaltung vermieden werden können.

Durch die zusätzlichen konstruktiven Freiheiten für die Ausgestaltung der Wände in den Wärmetauschern können die Wärmetauscher so ausgelegt werden, dass eine bessere Durchströmbarkeit hinsichtlich der organischen Masse erreicht werden kann. Da das Medium im Gegensatz zur organischen Masse nicht thixotrop ist, tritt keine Verstopfung des Wärmetauschers auf, auch wenn zeitweilig keine Wärme rückgeführt wird.

Im erhitzten organischen Material findet ein Hydrolyseprozess statt, wodurch Zellen und Zellklumpen aufgebrochen und löslich gemacht und der Faulung leichter zugänglich gemacht werden. Damit kann ein höheres Potenzial für die Umwandlung der organischen Masse und für die Stabilisierung erreicht werden. Aufgelöste bzw. hydrolysierte organische Feststoffe faulen vollständiger aus, als dies bei kompakten, nicht aufgeschlossenen Zellen der Fall ist. Der Aufschluss des zellulären organischen Materials erhöht sich mit dem Grad der Hydrolysierung, so dass die separat vorgesehenen, spezialisierten Heiz- und Kühlelemente gemäß des Gegenstands des ersten Anspruchs eine genau geregelte, hoch effiziente Hydrolyse ermöglichen.

In einem Ausführungsbeispiel ist das Medium eine Flüssigkeit, wobei diese vorteilhafterweise eine hohe Wärmekapazität aufweist und einfach zu fördern ist.

Die Förderung des Mediums wird vorteilhafterweise durch eine Pumpe erreicht, die das Medium in einem Kreislauf zwischen Heizelement und Kühlelement fördert, wodurch in einfacher Weise Wärme vom Kühlelement zum Heizelement gefördert wird und in den jeweiligen Wärmetauschern Wärme der organischen Masse zugeführt bzw. von dieser abgeführt wird.

Weiterhin kann eine Drossel funktional zwischen dem Heizelement und Kühlelement vorgesehen sein. Die Drossel ermöglicht eine schnelle Druckentspannung der organischen Masse unter Freisetzung von Entspannungsdampf und Hydrolysegas. Dies fördert die Desintegration der organischen Masse, indem die Zerstörung der Zellwände, der in der organischen Masse vorhandenen Zellen bewirkt wird, sowie größere Partikel zerkleinert werden. Die so behandelte organische Masse kann einfacher in einem Faultank oder Ähnlichem verwertet werden, da der biologische Zersetzungsprozess schneller voranschreiten kann. Die Drossel kann als Blende, Drosselventil oder in beliebiger anderer Bauform ausgeführt sein. Insbesondere ist es auch möglich, dass der Drosseleffekt nur mittels der Leitung der organischen Masse erzielt wird, indem insbesondere durch eine Aufweitung der Leitung der Druck der organischen Masse reduziert wird.

Weiterhin kann ein Entspannungstank nach der Drossel vorgesehen sein, in dem Entspannungsdampf von dem organischen Material abgeführt werden kann. Damit kann der nötige Raum für eine effiziente und schlagartige Entspannung des organischen Materials geschaffen werden.

Vorteilhafterweise kann sich an dem Entspannungstank ein Entspannungstankventil anschließen, das ausgelegt ist, um den Druck im Entspannungstank zu regeln. Dadurch kann im Entspannungstank der Druck genau so eingestellt werden, dass eine effiziente Hydrolyse bei genau geregeltem Durchfluss erreicht werden kann.

Vorteilhafterweise kann weiterhin ein Hydrolysereaktor für die organische Masse funktional zwischen dem Heizelement und der Drossel vorgesehen sein. Der Hydrolysereaktor ermöglicht eine weitere Erwärmung der organischen Masse, so dass diese auf die gewünschte Hydrolysetemperatur gebracht werden kann. Der Hydrolyseprozess kann somit bei idealer Temperatur stattfinden. Der Hydrolysereaktor ist insbesondere ein indirekter Wärmetauscher, der von einem extern erhitzten Wärmemittel durchströmt wird, das in einer zusätzlichen Wärmequelle erwärmt wird. Insbesondere handelt es sich bei dem extern erhitzten Wärmemittel um Thermalöl. Alternativ ist jede andere im Stand der Technik bekannte Art der Erhitzung im Hydrolysereaktor möglich, beispielsweise eine elektrische Heizung.

Ein Speicher für die organische Masse kann funktional zwischen dem Hydrolyse-Reaktor und der Drossel vorgesehen sein. In dem Speicher kann die organische Masse für eine gewisse Zeit auf Hydrolysetemperatur gehalten werden, bevor eine Entspannung in der Drossel stattfindet.

In einer Ausführungsform kann ein Zusatzkühlelement für die organische Masse funktional zwischen dem Hydrolysereaktor und der Drossel vorgesehen sein. Das Zusatzkühlelement ist mittels eines ersten Zusatzzweiges im Kreislauf des Mediums mit dem Kühlelement und Heizelement thermisch gekoppelt. Dadurch kann effizient Wärme der noch erhitzten organischen Masse zurückgeführt werden, bevor diese durch die schlagartige Entspannung in der Drossel abkühlt. Somit wird die Energieeffizienz der Vorrichtung erhöht, da mehr Wärme zurückgeführt werden kann und weniger primäre Energie verbraucht wird. Das Zusatzkühlelement erlaubt, dass die Entspannungstemperatur im Entspannungstank unabhängig von der Hydrolysetemperatur eingestellt werden kann. Damit kann das Hydrolyseergebnis optimiert werden, während gleichzeitig der thermische Nettoenergiebedarf, d.h. die von außen eingebrachte thermische Energie, reduziert werden kann.

In einer Ausführungsform kann ein Zusatzheizelement für die organische Masse funktional zwischen dem Heizelement und dem Hydrolysereaktor vorgesehen sein. Das Zusatzkühlelement und das Zusatzheizelement sind mittels des ersten Zusatzzweiges im Kreislauf des Mediums thermisch gekoppelt. Durch die zweistufige Vorerwärmung mittels Heizelement und Zusatzheizelement kann eine gestufte Erwärmung der organischen Masse erreicht werden, so dass die jeweiligen Wärmetauscher jeweils genau für den jeweiligen Temperaturbereich ausgelegt werden können. Dabei wird in dem Zusatzheizelement durch die direkte thermische Kopplung mit dem Zusatzkühlelement eine höhere Temperatur als im Heizelement erreicht. Die Stellung des Heizmischventils beeinflusst den thermischen Nettoenergiebedarf des Systems signifikant und bietet somit die Möglichkeit, in Abhängigkeit der Parameter des Gesamtverfahrens, jeweils die Wärmeverteilung zwischen Hydrolysereaktor und Entspannungstank optimal einzustellen. Dies kann durch eine aktive Regelung während des Betriebs der Anlage geschehen.

Der Durchfluss durch den ersten Zusatzzweig des Kreislaufes kann durch ein Heizmischventil geregelt werden. Somit können zusätzliche Möglichkeiten der Feinregelung der Temperaturen geschaffen werden, insbesondere die Regelung des relativen Temperaturunterschieds zwischen dem Hydrolysereaktor und dem Entspannungstank.

Weiterhin kann eine Pumpe für die organische Masse funktional vor dem Heizelement vorgesehen sein. Dadurch kann das organische Material einfach auf einen hohen Druck gebracht werden, der die Effizienz der Hydrolyse steigert und einen hohen Druckabfall in der Drossel ermöglicht.

Vorteilhafterweise kann ein Kondensationstank für die organische Masse funktional nach dem Kühlelement vorgesehen sein, in dem der Entspannungsdampf auskondensieren kann, so dass die organische Masse inklusive der auskondensierten Bestandteile weiter behandelt werden kann.

Weiterhin kann ein Kondensationstankgasventil vorgesehen sein, um den Abfluss der gasförmigen Phase der organischen Masse aus dem Kondensationstank zu regeln, sodass die gasförmige Phase und fließfähige Bestandteile der organischen Masse getrennt abgeführt werden können.

Die noch bestehende gasförmige Phase der organischen Masse kann aus dem Kondensationstank über das Kondensationstankgasventil abgeführt werden, so dass die gasförmige Phase und die fließfähigen Bestandteile der organischen Masse getrennt weiterbehandelt werden können, wodurch die Weiterbehandlung effizienter wird als für einen zweiphasiges Gemisch. Das Kondensationstankgasventil dient der Regelung des Drucks im Kondensationstank.

Nach dem Kondensationstank kann ein Kondensatkühlelement vorgesehen sein, um die organische Masse weiter zu kühlen. Dies ermöglicht eine Regelung der Temperatur im Kondensationstank, da sowohl die Kühlung vor dem Kondensationstank mittels des Kühlelements, als auch die Kühlung nach dem Kondensationstank mittels des Kondensatkühlelements geregelt werden kann.

Vorteilhafterweise ist das Kondensatkühlelement mit dem Heizelement und dem Kühlelement mittels eines zweiten Zusatzzweiges des Kreislaufes des Mediums thermisch gekoppelt, wobei ein Kühlmischventil vorgesehen sein kann, das ausgelegt ist, die Verteilung des Mediums auf Kühlelement und Kondensatkühlelement zu regeln. Mittels dieser Anordnung ist eine effiziente Regelung der Verteilung der Kühlleistung auf das Kühlelement und Kondensatkühlelement möglich. Gewöhnlicherweise wird im Kühlmischventil eine Stromteilung im Verhältnis 1:1 eingestellt. Dennoch können in Abhängigkeit der im Entspannungstank vorliegenden und im Kondensationstank gewünschten Temperaturen auch andere Teilungsverhältnisse des Mediums im Kühlmischventil eingestellt werden. Insbesondere kann auch eine aktive Regelung des Kühlmischventils in Abhängigkeit der übrigen Verfahrensparameter implementiert werden.

Weiterhin kann ein Entspannungstankgasventil vorgesehen sein, um Gas bzw. die gasförmige Phase aus dem Entspannungstank abzuführen und insbesondere dem Kondensationstank zuzuführen. Dadurch kann der Entspannungsdampf an dem Kühlelement vorbeigeleitet werden. Dies ist vorteilhaft, da ein zweiphasiges Gemisch im Kühlelement eine geringere Kühlleistung bedingen würde. Somit kann durch dieses Merkmal die Kühleffizienz des Kühlelements gesteigert werden. Weiterhin dient das Entspannungstankgasventil der Regelung des Drucks im Entspannungstank.

Das erfindungsgemäße Verfahren zur thermischen Hydrolyse von organischer Masse umfasst, dass die organische Masse auf Hydrolysetemperatur erwärmt und anschließend von der Hydrolysetemperatur abgekühlt wird, wobei wenigstens ein Teil der Erwärmung und Abkühlung mittels jeweils eines Wärmetauschers erfolgt, in dem Wärme zwischen der organischen Masse und einem Medium getauscht wird, während die organische Masse und das Medium in den Wärmetauschern voneinander getrennt sind, wobei mindestens ein Teil der hydrolysierten organischen Masse zur noch nicht hydrolysierten organischen Masse zurückgeführt wird.

Durch die Trennung der organischen Masse und des Mediums wird ein effizientes Verfahren mit den Vorteilen der bereits oben beschriebenen Vorrichtung bereitgestellt.

Weiterhin kann sich das Verfahren dadurch auszeichnen, dass die organische Masse kontinuierlich gefördert wird, wodurch eine hohe Förderleistung und eine hohe betriebswirtschaftliche Effizienz der Anlage erreicht werden kann.

Insbesondere kann der Druck der organischen Masse vor der Erwärmung erhöht werden.

In einer Ausführungsform wird der Druck der erwärmten organischen Masse schlagartig reduziert.

Die organische Masse kann nach der schlagartigen Druckreduzierung einem Entspannungstank zugeführt werden.

Insbesondere wird die erwärmte organische Masse vor der schlagartigen Entspannung einem Speicher zugeführt.

In einer Ausführungsform wird die erwärmte organische Masse mittels des Mediums gekühlt, bevor der Druck der organischen Masse schlagartig reduziert wird.

Insbesondere wird aus der hydrolysierten organischen Masse nach dem zumindest teilweise erfolgten Abkühlen ein Teil der gasförmigen Phase abgeschieden.

Vorteilhafterweise wird wenigstens ein Teil der gasförmigen Phase der hydrolysierten organischen Masse aus dem Entspannungstank abgeschieden.

Die organische Masse kann nach dem Abscheiden der gasförmigen Phase weiter gekühlt werden.

Im Folgenden wird eine bevorzugte Ausführungsform der erfindungsgemäßen Vorrichtung und des erfindungsgemäßen Verfahrens anhand der folgenden Figuren beschrieben:
- Figur 1: zeigt eine Ausführungsform der Erfindung,
- Figur 2: zeigt eine zweite Ausführungsform der Erfindung.

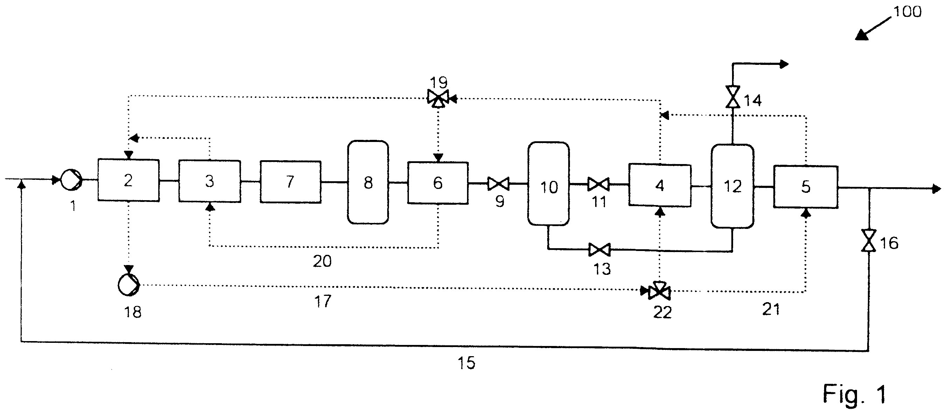

Die in Figur 1 schematisch dargestellte erfindungsgemäße Vorrichtung 100 ist wie folgt aufgebaut. Eine Zuleitung für organische Masse, d.h. Rohschlamm, ist mit einer Hochdruckpumpe 1 verbunden. Über eine weitere Leitung ist die Hochdruckpumpe 1 mit einem Heizelement 2 verbunden. Bei dem Heizelement 2 handelt es sich um ein von einem Medium, in diesem Fall Wasser, durchströmten indirekten Wärmetauscher. Somit ist der Durchfluss von erhitztem Wasser, der mit der gepunkteten Linie dargestellt ist, vollkommen vom Durchfluss der organischen Masse, der mit der durchgezogenen Linie dargestellt ist, entkoppelt. Es findet lediglich eine Übertragung von Wärme an den Grenzflächen des Wärmetauschers statt.

An das Heizelement 2 ist mittels einer Leitung ein Zusatzheizelement 3 angeschlossen, das ebenfalls durch einen indirekten Wärmetauscher gebildet wird, der einerseits von der organischen Masse und andererseits vom Medium durchströmt wird. Eine Erwärmung des Mediums findet in den Kühlelementen 4, 5 und 6 statt, die alle als indirekte Wärmetauscher zwischen dem Medium und der organischen Masse ausgeführt sind.

Das Zusatzheizelement 3 ist mit einer Leitung mit dem Hydrolysereaktor 7 verbunden, wobei in diesem Energie von außerhalb des Systems zugeführt wird, um die organische Masse zusätzlich zu erhitzen. Der Hydrolysereaktor 7 kann als Rohrreaktor ausgeführt sein, worin die organische Masse mittels extern erhitzten Thermalöls weiter erwärmt wird. Alternativ kann im Hydrolysereaktor 7 natürlich auch elektrische Energie verwendet werden, um die organische Masse zu erhitzen. Der Hydrolysereaktor ist mit einer Rohrleitung an einen Speicher 8 angeschlossen, der ein gewisses Volumen aufweist, so dass die organische Masse für eine bestimmte Verweildauer gehalten wird, damit die Hydrolyse möglichst weit voranschreitet. Im Speicher 8 herrscht ein hoher Druck und eine hohe Temperatur.

Der Speicher 8 ist mit einer Leitung mit dem Zusatzkühlelement 6 verbunden, in dem die organische Masse mittels des Mediums gekühlt wird. An das Zusatzkühlelement 6 schließt sich eine Drossel an, die hier als Drosselventil 9 ausgeführt ist, das direkt in einen Entspannungstank 10 mündet. Dadurch wird die organische Masse schlagartig entspannt. Durch den schnellen Druckabfall kommt es zum Sieden innerhalb der organischen Masse, wodurch beispielsweise Zellen in der organischen Masse zum Platzen gebracht werden, da in deren Inneren der Druck stark ansteigt. Das Drosselventil 9 kann verstellbar und regelbar sein.

Vom Entspannungstank 10 führt eine Leitung mit einem Entspannungstankventil 11 zum Kühlelement 4. Das Entspannungstankventil 11 ist ein regelbares Ventil und ist ausgelegt, den Druck im Entspannungstank 10 optimal einzustellen. Das Entspannungstankventil 11 kann alternativ auch durch eine frequenzgesteuerte Pumpe ergänzt werden, um den Druckverlust in den nachfolgenden Wärmetauschern auszugleichen.

Das Kühlelement 4 ist mit einer Leitung für die organische Masse mit einem Kondensationstank 12 verbunden. Alternativ dazu ist der Entspannungstank 10 auch über ein Entspannungstankgasventil 13 mit dem Kondensationstank 12 verbunden, wobei über das Entspannungstankgasventil 13 gasförmige Bestandteile der organischen Masse am Kühlelement 4 vorbei zum Kondensationstank 12 geleitet werden. Der Kondensationstank 12 ist mit einer Leitung für die organische Masse mit dem Kondensatkühlelement 5 verbunden. Vom Kondensatkühlelement 5 wird die organische Masse zu einem nicht dargestellten Faulturm geleitet. Am Kondensationstank 12 ist weiterhin ein Kondensationstankgasventil 14 vorgesehen, das gasförmige Bestandteile aus dem Kondensationstank 12 direkt zum Faulturm leitet.

Weiterhin weist die Vorrichtung eine Rückführungsleitung 15 für die organische Masse auf, die mit einem Rückführventil 16 versehen ist. Die Rückführungsleitung führt die organische Masse, die bereits die Vorrichtung durchlaufen hat, zurück vor die Pumpe 1.

Für das Medium, das in den Heizelementen 2, 3 die organische Masse erwärmt und in den Kühlelementen 4, 5, 6 die organische Masse kühlt, ist ein Kreislauf 17 vorgesehen, der aus Leitungen besteht, die in Figur 1 mit gepunkteten Linien dargestellt sind. Eine Pumpe 18 fördert dabei das Medium. Innerhalb des Kreislaufes 17 ist ein Heizmischventil 19 vorgesehen, mit dem geregelt werden kann, wie groß der Anteil des Mediums ist, der durch einen ersten Zusatzzweig 20 fließt. Im ersten Zusatzzweig 20 wird das Medium im Zusatzkühlelement 6 unter Kühlung der organischen Masse erhitzt, und im Zusatzheizelement 3 unter Erhitzung der organischen Masse gekühlt. Der erste Zusatzzweig 20 mündet vor dem Heizelement 2 wieder in den Hauptkreislauf.

Weiterhin weist der Kreislauf 17 einen zweiten Zusatzzweig 21 auf, wobei der Anteil des Mediums, der durch den zweiten Zusatzzweig 21 fließt, durch das Kühlmischventil 22 geregelt wird. Der zweite Zusatzzweig 21 fließt durch das Kondensatkühlelement 5, wobei darin das Medium unter Kühlung der organischen Masse erwärmt wird. Der zweite Zusatzzweig 21 mündet nach dem Kühlelement 4 wieder in den Hauptkreislauf.

Im Folgenden wird das erfindungsgemäße Verfahren anhand von Figur 1 beschrieben.

Zunächst wird die etwa unter Normaltemperatur und Normaldruck stehende organische Masse, d.h. der Rohschlamm, der Hochdruckpumpe 1 zugeführt, die den erforderlichen Systemdruck für die thermische Hydrolyse erzeugt. Die erforderliche Druckerhöhung setzt sich zusammen aus dem Dampfdruck des Rohschlamms bei der gewählten Hydrolysetemperatur, den Druckverlusten in den nachfolgenden Wärmetauschern und einem Sicherheitszuschlag, um das Sieden des Rohschlammes bei der gewählten Hydrolysetemperatur zu vermeiden. Bei einer gewählten maximalen Hydrolysetemperatur von 170°C und einer angenommenen dynamischen Viskosität des Rohschlammes von 150 mPas ergibt sich ein Dampfdruck des Rohschlammes bei der maximalen Hydrolysetemperatur von ca 8 bar und ein Druckverlust in den Wärmetauschern von ca. 6 bar. Der Sicherheitszuschlag wird auf 2 bar festgesetzt. Damit ergibt sich ein Förderdruck der Hochdruckpumpe 1 für den Rohschlamm vom mindestens 16 bar.

Der nun unter Druck gesetzte Rohschlamm wird über das Heizelement 2 und das Zusatzheizelement 3 zunächst vorgewärmt. Dies geschieht durch Nutzung der Abwärme, die bei der Rückkühlung des Hydrolysats über das Kühlelement 4, das Kondensatkühlelement 5 und das Zusatzkühlelement 6 gewonnen wird. Die endgültige Hydrolysetemperatur wird im Hydrolyse-Reaktor 7 erreicht, der als Wärmetauscher mit einem extern erhitzten Wärmemittel, insbesondere Thermalöl, ausgebildet ist. Das Thermalöl wird von einer zusätzlichen Heizeinrichtung auf die gewünschte Temperatur gebracht und daraufhin durch den Hydrolyse-Reaktor 7 geleitet, wobei darin die organische Masse auf die gewünschte Hydrolysetemperatur gebracht wird.

Um die erforderliche Hydrolysezeit zu erreichen, die sich deutlich von der hydraulischen Aufenthaltszeit im Hydrolyse-Reaktor 7 unterscheidet, ist diesem der Speicher 8 nachgeschaltet, der so dimensioniert ist, dass die gewählte Hydrolysezeit jederzeit sicher eingehalten wird. So beträgt die hydraulische Aufenthaltszeit im Hydrolyse-Reaktor 7 lediglich etwas mehr als 30 Sekunden, wohingegen die Hydrolysezeit insgesamt mehr als 30 Minuten beträgt. Der Speicher 8 ist so ausgeführt, dass einerseits das gebildete Hydrolysegas entweichen kann und andererseits sich eventuell absetzende Feststoffe nicht im Speicher 8 akkumulieren und so das verfügbare Speichervolumen unkontrolliert verkleinern.

Nach Passage des Speichers 8 tritt die organische Masse in das Zusatzkühlelement 6 ein, das die Temperatur der unter Druck stehenden organischen Masse absenkt.

Dann tritt das organische Material durch das Drosselventil 9, wobei die schlagartige Entspannung eine Zerstörung der Zellwände der in der organischen Masse vorhandenen Zellen bewirkt. Die dabei frei werdende Verdampfungsenergie senkt die Temperatur der organischen Masse entsprechend ab.

Um einen optimalen Entspannungsvorgang zu erreichen, ist der Entspannungstank 10 vorgesehen, der sich direkt an das Drosselventil 9 anschließt und der den nötigen Raum für die Entspannung der organischen Masse bereitstellt.

Die flüssige Phase der organischen Masse wird vom Entspannungstank 10 über das Entspannungstankventil 11 und das Kühlelement 4 zu dem Kondensationstank 12 geleitet. Hingegen wird die gasförmige Phase, d.h. der Entspannungsdampf, vom Entspannungstank 10 unter Umgehung des Kühlelements 4 über das Entspannungstankgasventil 13 zum Kondensationstank 12 geleitet. Durch die Trennung der gasförmigen und flüssigen Phase der organischen Masse nach dem Entspannungstank 10 kann eine effiziente Kühlung im Kühlelement 4 ermöglicht werden.

Im Kondensationstank 12 wird der Entspannungsdampf mit der bereits über das Kühlelement 4 gekühlten organischen Masse gewaschen und dadurch kondensiert.

Verbleibende gasförmige Bestandteile im Kondensationstank 12 können über das Kondensationstankgasventil 14 direkt einem nicht dargestellten Faulturm zugeführt werden. Die flüssigen Bestandteile der organischen Masse werden nach dem Kondensationstank 12 über das Kondensatkühlelement 5 weiter gekühlt und dann dem Faulturm zugeführt.

Über die Rückführungsleitung 15 und das Rückführventil 16 kann zum Ausgleich eventuell diskontinuierlich anfallender anfänglicher Mengen der organischen Masse zumindest ein Teil der organischen Masse zurückgeführt werden und so ein kontinuierlicher Betrieb der Anlage aufrecht erhalten werden. Zudem ermöglicht die Rückführungsleitung 15 eine Reinigungsflüssigkeit durch die Anlage im Kreis zu fahren und damit eventuelle Verkrustungen durch die organische Masse in der Anlage zu entfernen.

Der Kreislauf 17 leitet ein wärmetransportierendes Medium, insbesondere Wasser, über eine Pumpe 18 durch die verschiedenen Heizelemente 2, 3 und Kühlelemente 4, 5, 6, die alle als indirekte Wärmetauscher ausgeführt sind. Damit wird Wärme der bereits hydrolysierten organischen Masse zur noch nicht hydrolysierten organischen Masse zurückgeführt, um ein energieeffizientes System zu ermöglichen, das eine im Vergleich zu anderen im Stand der Technik bekannten Systemen geringere zugeführte Wärmeleistung benötigt. Der Kreislauf 17 ist so ausgelegt, dass das Medium an keiner Stelle verdampft, damit das Medium eine möglichst hohe Wärmetransportleistung aufweist.

Weiterhin ermöglicht eine Entkopplung des Mediums im Kreislauf 17 von der organischen Masse, dass der Druck der organischen Masse an jede Stelle der Vorrichtung so eingestellt werden kann, wie es die optimalen Verfahrensbedingungen erfordern, wodurch die Effizienz der Hydrolyse der organischen Masse gesteigert werden kann

Der Kreislauf 17 des Mediums weist weiterhin das Heizmischventil 19 auf, das einen Teil des Mediums in den ersten Zusatzzweig 20 leitet, wodurch das Zusatzkühlelement 6 und Zusatzheizelement 3 durchströmt werden. Damit wird im ersten Zusatzzweig 20 durch das Zusatzkühlelement 6 eine höhere Temperatur des Mediums erreicht, die für die Erhitzung der organischen Masse im Zusatzheizelement 3 verwendet werden kann. Durch das Zusatzkühlelement 6 und das Zusatzheizelement 3, die über den ersten Zusatzzweig 20 in direkter Verbindung stehen, kann der Primärenergiebedarf der Anlage weiter gesenkt werden, ohne dass dies Auswirkungen auf das Hydrolyseergebnis hat. Dabei wird der Fluss durch den ersten Zusatzzweig 20 durch das Heizmischventil 19 gemäß den Anforderungen des Prozesses geregelt.

Weiterhin weist der Kreislauf 17 den zweiten Zusatzzweig 21 auf, der einen Teil des Mediums in das Kondensatkühlelement 5 nach dem Kondensationstank 12 abzweigt. Die Menge des in den zweiten Zusatzzweig 21 abgeführten Mediums wird mittels des Kühlmischventils 22 geregelt. Mittels des Kühlmischventils 22 ist es somit möglich, die Temperatur im Kondensationstank 13 zu regeln, um darin die gewünschten Bedingungen für eine eventuelle Freigabe von gelösten Gasen in der organischen Masse zu schaffen.

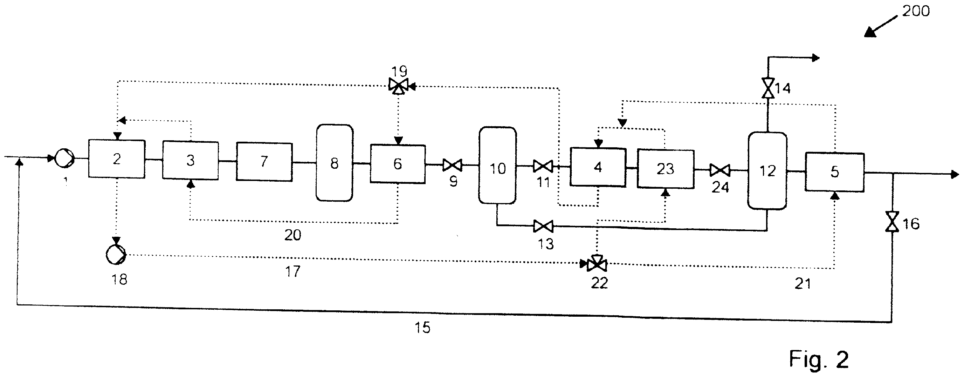

In Figur 2 ist eine zweite Ausführungsform der erfindungsgemäßen Vorrichtung 200 zur thermischen Hydrolyse von organischer Masse dargestellt. Im Wesentlichen unterscheidet sich diese Ausführungsform bezüglich der Kühlung der organischen Masse. Das Kühlelement 4 ist mit einer Leitung für die organische Masse zu einem zweiten Kühlelement 23 versehen. An das zweite Kühlelement 23 schließt sich eine Leitung mit einem Ventil 24 zum Kondensationstank 12 an. Der wesentliche Unterschied dieser Vorrichtung zur ersten Ausführungsform ist, dass sowohl der Hauptkreislauf 17, als auch der erste Zusatzzweig 21 des Mediums an das Kühlelement 4 angeschlossen sind, und somit das gesamte Medium durch das Kühlelement 4 gefördert wird.

Mittels des Kühlmischventils 22 ist einstellbar, welcher Anteil der Kühlung der organischen Masse vor bzw. nach dem Kondensationstank 12 stattfinden soll. Das Ventil 24 ist dazu ausgelegt, den Druck bzw. Durchfluss in den Kühlelementen 4 und 23 zu regeln, so dass in diesen ein optimaler Wärmetausch zwischen der organischen Masse und dem Medium stattfinden kann.

Da das Medium einzig für den Zweck des Wärmetransports verwendet wird, kann ein speziell dafür ausgewähltes Medium wie z.B. Wasser oder eine andere Flüssigkeit mit hoher Wärmekapazität ausgewählt werden. Weiterhin kann das Medium so ausgewählt werden, dass geringe Anforderungen an die Gestaltung der daran angrenzenden Grenzflächen der Wärmetauscher gestellt werden. Dadurch wird zusätzliche Gestaltungsfreiheit in den Wärmetauschern hinsichtlich der darin geformten Durchflüsse für die organische Masse ermöglicht, so dass die Durchflüsse für die organische Masse mit großen Querschnitten ausgelegt werden können, damit sich keine kritischen Verkrustungen bilden.

Weiterhin können die Wärmetauscherflächen auf der Seite der organischen Masse so ausgelegt sein, dass sich daran Turbulenzen bilden, die einer Verkrustungsgefahr ebenfalls entgegenwirken, insbesondere durch das Vorsehen von mechanischen Einsätzen. Die Wärmetauscherflächen können so ausgelegt werden, dass nur eine geringe Temperaturdifferenz zwischen dem Medium und der geheizten organischen Masse notwendig ist, um so lokale Überhitzungen zu minimieren, die die Siedeneigung der organischen Masse erhöhen. Auch dadurch können wirksam Verkrustungen vermieden werden.

Die Erzeugung der notwendigen Prozesswärme durch den Hydrolyse-Reaktor 7 kann extern über ein Thermalöl oder einem Dampfkessel erfolgen. Der Vorteil der Verwendung eines Thermalöls liegt im Wegfall einer Kesselspeisewasseraufbereitung, wie sie beim Dampfkessel erforderlich ist. Vorteilhaft bei der Verwendung eines Dampfkessels ist die hohe Wärmekapazität von Heißwasser als Wärmemittel im Hydrolyse-Reaktor 7. Beim Hydrolyse-Reaktor 7 kann es sich ebenfalls um einen indirekten Wärmetauscher handeln.

Insgesamt wird darauf hingewiesen, dass sowohl die Förderleistung der Pumpen 1, 18 regelbar sein kann, als auch dass sämtliche Ventile 9, 11, 13, 14, 16, 24 und Verteilerventile 19, 22 separat regelbar sein können, um Einfluss auf die Prozessparameter des Verfahrens nehmen zu können.

## Patentansprüche

1. Vorrichtung zur thermischen Hydrolyse von organischer Masse, wobei ein Heizelement (2) und ein Kühlelement (4) vorgesehen sind, um die organische Masse zu erwärmen bzw. abzukühlen, und
wobei als Heizelement (2) und Kühlelement (4) jeweils Wärmetauscher vorgesehen sind, in denen Wärme zwischen der organischen Masse und einem Medium getauscht wird, wobei die organische Masse und das Medium in den Wärmetauschern voneinander getrennt sind,
**dadurch gekennzeichnet,**
**dass** eine Rückführungsleitung (15) zur Rückführung mindestens eines Teils der hydrolysierten organischen Masse zur noch nicht hydrolysierten Masse mit einem Rückführventil (16) vorgesehen ist,
wobei das Rückführventil (16) ausgelegt ist, den Durchsatz der Rückführungsleitung (15) zu regeln.

2. Vorrichtung gemäß Anspruch 1, **dadurch gekennzeichnet, dass** eine Pumpe (1) für die organische Masse funktional vor dem Heizelement (2) vorgesehen ist.

3. Vorrichtung gemäß einem der vorangehenden Ansprüche, **dadurch gekennzeichnet, dass** das Medium eine Flüssigkeit ist.

4. Vorrichtung gemäß einem der vorangehenden Ansprüche, **dadurch gekennzeichnet, dass** eine Drossel (9) funktional zwischen dem Heizelement (2) und Kühlelement (4) vorgesehen ist.

5. Vorrichtung gemäß Anspruch 4, **dadurch gekennzeichnet, dass** ein Hydrolyse-Reaktor (7) für die organische Masse funktional zwischen dem Heizelement (2) und der Drossel (9) vorgesehen ist.

6. Vorrichtung gemäß Anspruch 5, **dadurch gekennzeichnet, dass** der Hydrolyse-Reaktor (7) ein indirekter Wärmetauscher ist, der von einem extern erhitzten Wärmemittel durchströmt wird.

7. Verfahren zur thermischen Hydrolyse von organischer Masse, wobei die organische Masse auf Hydrolysetemperatur erwärmt und anschließend von der Hydrolysetemperatur abgekühlt wird, und
wobei wenigstens ein Teil des Erwärmens und Abkühlens mittels jeweils eines Wärmetauschers erfolgt, in denen Wärme zwischen der organischen Masse und einem Medium getauscht wird, während die organische Masse und das Medium in den Wärmetauschern voneinander getrennt sind,
**dadurch gekennzeichnet,**
**dass** mindestens ein Teil der hydrolysierten organischen Masse zur noch nicht hydrolysierten organischen Masse rückgeführt wird.

8. Verfahren gemäß Anspruch 7, **dadurch gekennzeichnet, dass** über eine Rückführungsleitung (15) eine Reinigungsflüssigkeit durch die Anlage im Kreis gefahren wird, und damit eventuelle Verkrustungen durch die organische Masse in der Anlage entfernt werden.

9. Verfahren gemäß Anspruch 7 oder 8, **dadurch gekennzeichnet, dass** Wärme zwischen den Wärmetauschern über das Medium übertragen wird, wobei das Medium eine Flüssigkeit ist, die in einem Kreislauf geführt wird.

10. Verfahren gemäß einem der Ansprüche 7 bis 9, **dadurch gekennzeichnet, dass** die erwärmte organische Masse hydrolysiert wird, indem diese in zwei Heizstufen auf Hydrolysetemperatur erwärmt wird.

11. Verfahren gemäß einem der Ansprüche 7 bis 10, **dadurch gekennzeichnet, dass** die organische Masse kontinuierlich gefördert wird.

## Claims

1. A device for thermal hydrolysis of organic mass, wherein a heating element (2) and a cooling element (4) are respectively provided for heating and cooling the organic mass, and
wherein heat exchangers are provided as heating element (2) and cooling element (4), in which heat is exchanged between the organic mass and a medium,
wherein the organic mass and the medium are separated from each other in the heat exchangers,
**characterized in that**,
a recirculation conduit (15) for recirculating at least part of the hydrolyzed organic mass to the not yet hydrolyzed mass is provided with a feedback valve (16),
wherein the feedback valve (16) is adapted to control the flow rate of the recirculation conduit (15).

2. The device according to claim 1, **characterized in that** a pump (1) for the organic mass is functionally provided before the heating element (2).

3. The device according to one of the preceding claims, **characterized in that** the medium is a liquid.

4. The device according to one of the preceding claims, **characterized in that** a throttle (9) is functionally provided between the heating element (2) and the cooling element (4).

5. The device according to claim 4, **characterized in that** a hydrolysis reactor (7) for the organic mass is functionally provided between the heating element (2) and the throttle (9).

6. The device according to claim 5, **characterized in that** the hydrolysis reactor (7) is an indirect heat exchanger through which an externally heated heating medium flows.

7. A method for the thermal hydrolysis of organic mass, wherein the organic mass is heated to hydrolysis temperature and then cooled down from the hydrolysis temperature, and wherein at least part of the heating and cooling occurs by means of one respective heat exchanger, in which heat is exchanged between the organic mass and a medium, while the organic mass and the medium are separated from one another in the heat exchangers,
**characterized in that**
at least a part of the hydrolyzed organic mass is recirculated to the not yet hydrolyzed organic mass.

8. The method according to claim 7, **characterized in that** a cleaning liquid is circulated through the installation via a recirculation conduit (15), thereby removing any encrustations caused by the organic mass in the installation.

9. The method according to claim 7 or 8, **characterized in that** heat is transferred between the heat exchangers via the medium, the medium being a liquid which is circulated in a circuit.

10. The method according to one of the claims 7 to 9, **characterized in that** the heated organic mass is hydrolyzed by heating it to hydrolysis temperature in two heating stages.

11. The method according to one of the claims 7 to 10, **characterized in that** the organic mass is continuously conveyed.

## Revendications

1. Dispositif pour l'hydrolyse thermique d'une masse organique, où sont prévus un élément chauffant (2) et un élément de refroidissement (4) pour chauffer ou refroidir la masse organique, et
où des échangeurs de chaleur, dans lesquels de la chaleur est échangée entre la masse organique et un milieu, sont respectivement prévus comme élément chauffant (2) et élément de refroidissement (4),
où la masse organique et le milieu sont séparés l'un de l'autre dans les échangeurs de chaleur,
**caractérisé en ce qu'**une conduite de recirculation (15) est prévue, avec une vanne de recirculation (16), pour la recirculation d'au moins une partie de la masse organique hydrolysée vers la masse non encore hydrolysée,
où la vanne de recirculation (16) est conçue pour contrôler le débit de la conduite de recirculation (15).

2. Dispositif selon la revendication 1, **caractérisé en ce qu'**une pompe (1) pour la masse organique est prévue de manière fonctionnelle avant l'élément chauffant (2).

3. Dispositif selon l'une des revendications précédentes, **caractérisé en ce que** le milieu est un liquide.

4. Dispositif selon l'une des revendications précédentes, **caractérisé en ce qu'**un étranglement (9) est prévu fonctionnellement entre l'élément de chauffage (2) et l'élément de refroidissement (4).

5. Dispositif selon la revendication 4, **caractérisé en ce qu'**un réacteur d'hydrolyse (7) pour la masse organique est prévu de manière fonctionnelle entre l'élément chauffant (2) et l'étrangleur (9).

6. Dispositif selon la revendication 5, **caractérisé en ce que** le réacteur d'hydrolyse (7) est un échangeur de chaleur indirect dans lequel circule un fluide caloporteur chauffé de l'extérieur.

7. Procédé pour l'hydrolyse thermique d'une masse organique, dans lequel la masse organique est chauffée à la température d'hydrolyse et ensuite refroidie à partir de la température d'hydrolyse, et
où au moins une partie du chauffage et du refroidissement est effectuée au moyen d'un échangeur de chaleur respectif dans lesquels la chaleur est transférée entre la masse organique et un milieu, la masse organique et le fluide étant séparés l'un de l'autre dans les échangeurs de chaleur,
**caractérisé en ce qu'**au moins une partie de la masse organique hydrolysée est recirculée vers la masse organique non encore hydrolysée.

8. Procédé selon la revendication 7, **caractérisé en ce qu'**un liquide de nettoyage est circulé à travers l'installation par une conduite de recirculation (15), et des incrustations éventuelles causées par la masse organique dans l'installation sont ainsi éliminées.

9. Procédé selon la revendication 7 ou 8, **caractérisé en ce que** la chaleur est transférée entre les échangeurs de chaleur par l'intermédiaire du milieu, où le milieu est un liquide qui est mis en circulation dans un circuit.

10. Procédé selon l'une des revendications 7 à 9, **caractérisé en ce que** la masse organique chauffée est hydrolysée en la portant à la température d'hydrolyse en deux étapes de chauffage.

11. Procédé selon l'une des revendications 7 à 10, **caractérisée en ce que** la masse organique est transportée en continu.
